# EUROPEAN PATENT SPECIFICATION

(11) **EP 2 971 830 B1**
(45) Date of publication and mention of the grant of the patent: **11.07.2018**
(21) Application number: 13878268.5
(22) Date of filing: 03.05.2013
(51) Int. Cl.: F16D 41/067, F16D 47/04

(54) **BI-DIRECTIONAL OVERRUNNING CLUTCH HAVING SPLIT ROLL CAGE**
BIDIREKTIONALE FREILAUFKUPPLUNG MIT GETEILTEM ROLLKÄFIG
EMBRAYAGE À ROUE LIBRE BIDIRECTIONNEL AYANT UNE CAGE DE ROULEMENT FENDUE

(30) Priority: 15.03.2013 US 201313832473
(43) Date of publication of application: 20.01.2016
(73) Proprietor: The Hilliard Corporation, Elmira NY 14902-1504 (US)
(72) Inventor: HEATH, Kelly, P., Corning, NY 14830 (US); OCHAB, David, C., Horseheads, NY 14845 (US); PALMER, James, E., Elmira Heights, NY14903 (US); UPDYKE, John, R., Horseheads, NY 14845 (US); KNICKERBOCKER, Howard, J., Elmira, NY 14901 (US)
(74) Representative: Murgitroyd & Company
(86) International application number: PCT/US2013/039403
(87) International publication number: WO 2014/143090

(56) References cited:
- DE-A1- 4 219 143
- US-A- 1 175 300
- US-A- 2 191 763
- US-A- 3 700 082
- US-A- 3 935 753
- US-A1- 2003 089 570
- US-A1- 2012 145 505
- US-A1- 2012 152 686
- US-B1- 8 312 792
- US-B2- 7 490 708

## Description

### Field of the Invention

The invention relates to a clutch system, and in particular a split roll cage configuration for a bi-directional overrunning clutch, for example, for use a primary drive axle.

### Background

Bi-directional overrunning clutches are used to control torque transmission to the right and left segments of a primary drive shaft of a wheeled machine, to provide improved cornering ability and decreased wheel slippage as compared with solid shaft drives. One such overrunning clutch is described in U.S. Patent No. 6,722,484, which is commonly owned with the present application, and which discloses the introduction of claim 1. Yet the need exists for simpler more reliable overrunning clutches for use in machinery such as snowblowers, lawnmowers, and all-terrain vehicles.

### Summary

A bi-directional overrunning clutch is disclosed, comprising
a housing adapted to be engaged with and rotated by a drive mechanism, the housing including an inner cam surface;
a pair of hubs substantially coaxially aligned with each other within the housing and adapted to engage first and second shafts of a primary drive axle;
a roller assembly associated with each hub, each roller assembly including a roll cage having a set of slots positioning a plurality of rollers in an annular space between the hub and the inner cam surface of the housing, the rollers being spaced about an associated hub and adapted to wedgingly engage between the hub and the inner cam surface when one of the hubs and the housing is rotated with respect to the other of the hubs and the housing;
an end cap associated with each hub and attached at each end of the housing;
characterised in that the clutch further comprises:
   a friction disk mechanism associated with each hub and roller assembly for indexing the roller assembly relative to the hub, each friction disk mechanism including a friction plate engaged with the roll cage so as to rotate in combination with the roll cage and positioned to contact a contact surface on the hub during operation, and a spring compressed for biasing the friction plate into frictional contact with the contact surface of the hub; and
   a roll cage intermittent coupler located between each roll cage, the coupler configured to engage the roll cages so as to permit indexing of one roll cage relative to the other;
   wherein the inner cam surface has a forward cam surface and a reverse cam surface, such that when the housing is being driven with respect to at least one of the hubs, the rollers wedgingly engage between the forward cam surface and the at least one hub; and
   wherein when one of the hubs is overrunning by rotating faster than the housing and the other of the hubs, the roll cage coupler is configured to prevent the one set of rollers engaging the forward cam surface and the other set of rollers engaging the reverse cam surface, thereby limiting the ability of the rollers to engage between the reverse cam surface of the housing and the one hub; and
   wherein the contact surface is on a hub spacer connected to the hub so as to rotate in combination therewith and the spring is mounted on the opposite side of the friction plate from the contact surface and compressed between the hub and the friction plate,
   and wherein the engagement of the friction plate and the roll cage is provided by the spring biasing the friction plate into frictional engagement with a portion of the roll cage.

In one embodiment, the coupler includes a coupler hub with radially extending coupler teeth. Each coupler tooth has a length and width designed to position the coupler tooth in a corresponding slot in both cages. The width of the coupler tooth is less than the width of the associated slots so as to define a gap that permits one roll cage to index with respect to the other roll cage and the coupler tooth. The gap is preferably sized so that one roll cage can index so as to position its rollers to engage with one of either the forward or rear cam surfaces, while the coupler teeth prevent the other roll cage from indexing in the opposite direction thereby preventing its rollers from engaging with the other of either the forward or rear cam surfaces.

### Brief Description of Drawings

For the purpose of illustrating the invention, there are shown in the drawings an embodiment and other arrangements which help illustrate the present invention; it being understood, however, that this invention is not limited to the precise arrangements and constructions particularly shown.
Fig. 1 is a perspective view of a bi-directional overrunning clutch that helps illustrate the present invention.
Fig. 2 is a cross-sectional view of the clutch of Fig. 1.
Fig. 3 is a perspective view of the clutch of Fig. 1 with the housing and one end cap removed.
Fig. 3A is a perspective view of the clutch of Fig. 3 with one of the roll cages and hubs removed.
Fig. 4 is an end view of the partially assembled clutch of Fig. 3.
Fig. 4A is an end view of the partially assembled clutch of Fig. 3A.
Fig. 5 is a cross-sectional view of the partially assembled clutch of Fig. 3 taken along section 5-5 in Fig. 4.
Fig. 5A is a cross-sectional view of the partially assembled clutch of Fig. 3A taken along section 5A-5A in Fig. 4A.
Fig. 6 is a perspective view of another bi-directional overrunning clutch that helps illustrate the present invention.
Fig. 7 is an end view of the clutch of Fig. 6.
Fig. 8 is a cross-sectional view of the clutch of Fig. 7, taken along section 8-8.
Figs. 9-11 are isometric sectional views of an embodiment of a bi-directional overrunning clutch according to the present invention.
Fig. 12 is a cross-section view of the clutch of Fig. 9 in a differential housing.
Figs. 13A and 13B are enlarged views of a portion of the clutch of Fig. 12.

### Detailed Description

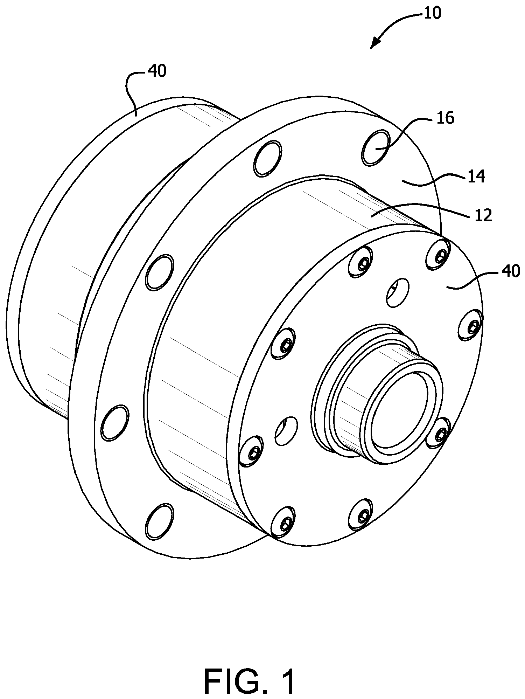

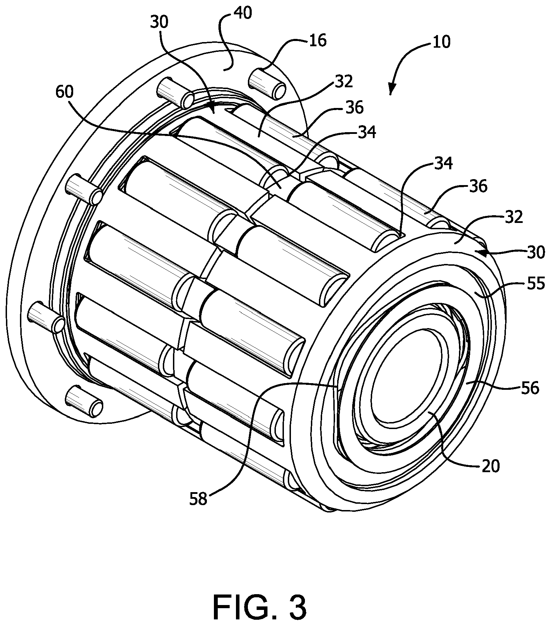

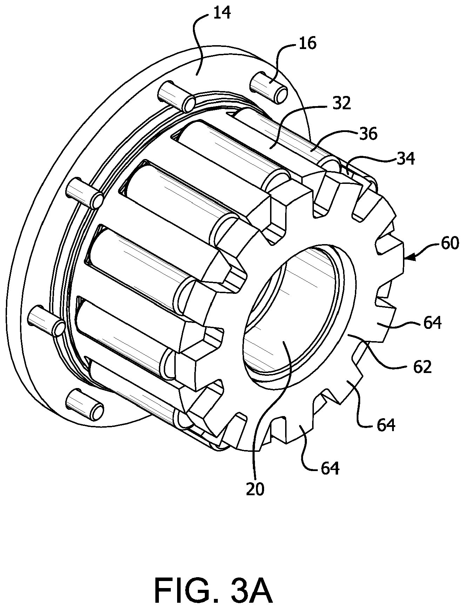

A bi-directional overrunning clutch 10 is shown in Figs. 1-5A. The clutch 10 includes a housing 12 and a flange 14 affixed to the housing 12. The flange 14 is adapted to receive an input gear, sprocket, or other drive component that is engaged with an external drive mechanism for imparting rotational movement to the flange 14 and thus to the housing 12. As depicted, the flange 14 includes bolt holes 16 for attaching the gear, it being understood that the gear may be attached to the flange 14 by any mechanical means known in the art, or may be formed as an integral part of the flange 14 or housing 12. When the drive mechanism rotates the gear, the flange 14 rotates, which in turn rotates the housing 12.

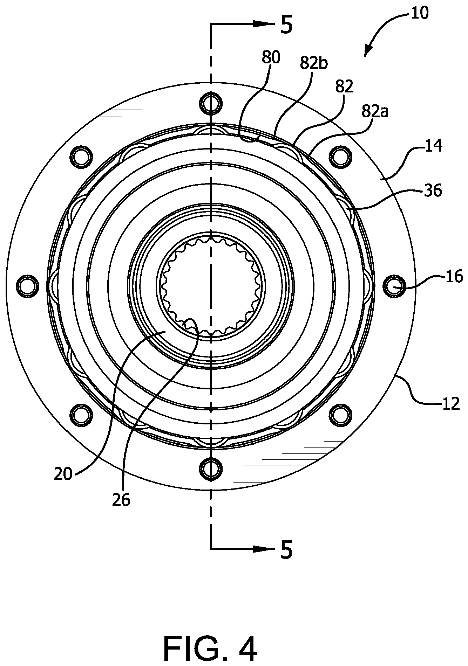

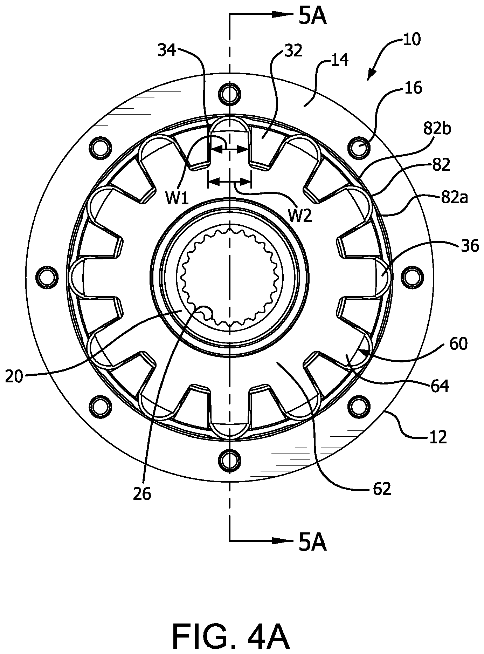

As shown in Figs. 4 and 4A, the housing 12 includes a substantially cylindrical inner surface 80. The inner surface 80 includes a plurality of an inner cam surfaces 82 including forward and reverse cam surfaces 82a, 82b. Depending on the desired direction of rotation of the housing 12, either surface 82a, 82b may be interchangeably considered as a forward or a reverse cam surface.

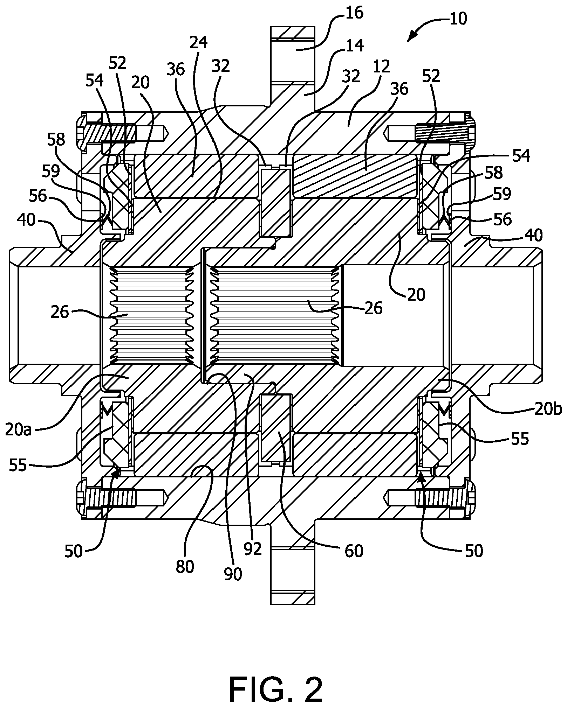

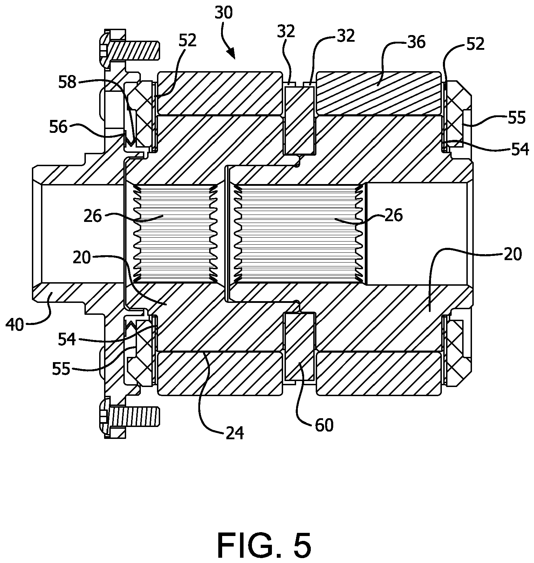

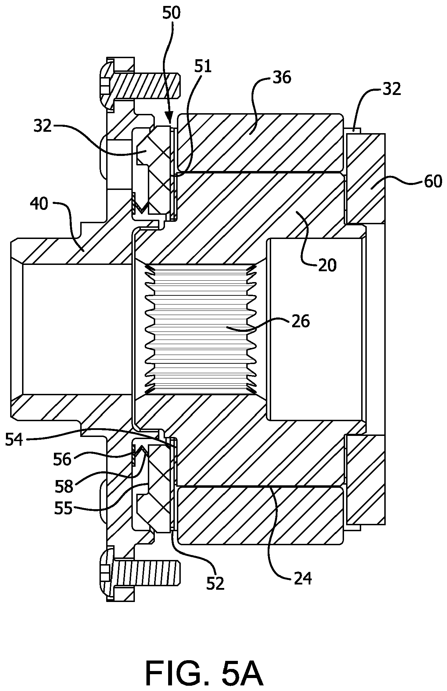

As shown in Figs. 2 and 5, a pair of hubs 20 is located within the housing 12. The hubs 20 are substantially coaxially aligned with each other within the housing 12, and are each adapted to rotate about their common axis within the housing 12. In the depicted arrangement of Fig. 2, the hubs 20 are not identical, but rather are mated to ensure their axial alignment. In particular, a first hub 20a includes a substantially cylindrical socket 90 while a second hub 20b includes a substantially cylindrical axial protrusion 92 adapted to be received into the socket 90.

The first hub 20a is adapted to engage an end of a first shaft of a primary drive axle (not shown) and the second hub 20b is adapted to engage an end of a second shaft of the primary drive axle (not shown). Each hub 20 has a substantially cylindrical outer surface 24 having a diameter smaller than the diameter of the inner surface 80 of the housing 12, so that an annular space is formed between the outer surface 24 of the hubs 20 and the inner surface 80 of the housing 12. Each hub 20 preferably has an internal bore 26 into which a portion of a primary drive axle shaft is received. In the depicted arrangement, the internal bores 26 include splines to allow the shafts to move axially inward and outward with respect to the hubs 20 while ensuring that each shaft will rotate along with its respective hub 20. In other arrangements, other mechanical connections between each shaft and its respective hub 20 may be used to ensure rotational coupling. It is further contemplated that the hubs 20 may be formed integrally with the primary drive shafts.

A pair of roller assemblies 30 is located within the housing 12, with a portion of each roller assembly 30 being situated in the annular space between the outer surface 24 of one of the hubs 20 and the inner surface 80 of the housing 12. As shown in detail in Figs. 2, 3, and 4A each roller assembly 30 includes a roll cage 32 formed in a substantially cylindrical shape. Each roll cage 32 corresponds to one of the hubs 20 and has a set of slots 34 spaced around the circumference of the roll cage 32. Each slot 34 is adapted to receive a cylindrical roller 36. Collectively, the slots 34 of one roll cage 32 position a plurality of rollers 36 in the annular space between the first hub 20a and the inner cam surface 82 of the housing 12, and the slots 34 of the other roll cage 32 positions a plurality of rollers 36 in the annular space between the second hub 20b and the inner cam surface 82 of the housing 12. In one arrangement, each set of rollers 36 has ten rollers, it being understood that any number of rollers greater than or equal to three may be used. As shown, each roller 36 is substantially cylindrical, but rollers of other shapes may be used, including but not limited to substantially spherical rollers.

The rollers 36 surrounding each hub 20 are adapted to be wedgingly engaged between the hub 20 and the inner cam surface 82 of the housing 12 when the associated hub 20 and the housing 12 are rotated with respect to the other. In particular, when the housing 12 is rotationally driven by an external drive mechanism at a speed faster than the hubs 20 are rotating, the rollers 36 are designed to wedgingly engage between the forward cam surfaces 82a in the housing and the outer surfaces 24 of the hubs 20, causing the hubs 20 to rotate with the housing 12. Similarly, when both hubs 20 are rotating faster than the housing 12, such as during a descent or deceleration, the hubs 20 cause the rollers 36 to wedge between the reverse cam surfaces 82b and the outer surfaces 24 of the hubs 20. The reverse cam surface engagement enables an engine braking or back driving effect, when available, whereby the reduced speed of the input gear slows or brakes the drive axles.

Providing two separate roller assemblies 30, each having a set of rollers 36 associated with one of the hubs 20, allows overrunning of one hub 20 while maintaining positive driving engagement of the other hub 20. For example, in a wheeled vehicle in which the hubs 20 drive wheels on opposite sides of the vehicle, when the vehicle travels around a curve, the wheel on the inside of the curve has a shorter distance to travel, and thus travels at a slower speed, than the wheel on the outside of the curve. Consequently, when the housing 12 is being rotationally driven while the vehicle is in a curve, the one hub 20, for example hub 20a, associated with the inside wheel will continue to be driven, with its respective rollers 36 engaged between the outer surface 24 of the hub 20a and the forward cam surfaces 82a of the inner surface 80 of the housing 12, while the other hub 20, for example hub 20b, associated with the outside wheel will be allowed to overrun, turning faster than the housing 12, such that its respective rollers 36 disengage from their wedging between the inner cam surfaces 82 and the outer surface 24 of the hub 20b, thus allowing the hub 20b to freely rotate as it is driven by the outer wheel. When the vehicle returns to a straight path and the speed of the disengaged hub 20b slows down to equal the speed of the housing 12, the rollers 36 surrounding the hub 20b re-engage (wedge) between the forward cam surfaces 82a and hub 20b so that the hub 20b is once again driven to rotate at the same speed as the housing 12.

However, since the current clutch uses a split roll cage, if the two roll cage assemblies 30 were completely decoupled, there is the potential that the rollers 36 associated with the overrunning hub 20b could go into reverse engagement with the reverse cam surfaces 82b of the inner surface 80 of the housing 12, thereby causing the vehicle to act as if it has a solid axle (*i.e*., one axle being driven by the housing 12, while the other axle tries to drive the housing 12). To overcome potential reverse engagement of an overrunning hub 20, the clutch 10 includes a roll cage coupler 60 positioned between the two roll assemblies 30, as shown in Figs. 2, 3, 3A, 4A, 5, and 5A. The coupler 60 includes a hub 62 with a plurality of teeth 64 extending radially outward from the hub 62. The number of teeth 64 preferably matches the number of slots 34 and the number of rollers 36 in each roll cage 32. As shown most clearly in Figs. 5 and 5A, the teeth 64 of the coupler 60 preferably fit into the slots 34 in each roll cage 32. As shown in Fig. 4A, the width W1 of the portion of each tooth 64 within a slot 34 is slightly less than the width W2 of the slot 34 of the roll cages 32 such that a gap exists. This gap is designed to permit a roll cage 32 to shift or index as discussed herein so that the rollers 36 are positioned to engage with the cam surface, but the gap is not large enough to permit the other roll cage 32 to index in the opposite direction. Accordingly, by using an intermittent coupler 60, the present split cage design of the present invention prevents the issue of one set of rollers engaging the forward cam surface to drive one axle and the other set of rollers engaging the reverse cam surface to be driven by the other axle.

Rotationally coupling together two separate roll cages 32 with an intermittent coupler 60 allows each roll cage 32 to move axially with respect to its associated hub 20, which enables a compact and simple friction disk mechanism to index each roll cage 32 relative to its associated hub 20, as discussed in detail below. The intermittent coupler also allows for a large torque difference from one axle to the other, and also allows for larger manufacturing tolerances in the clutch cam profile and hub diameters. The intermittent coupler also provides a method for retaining the roll assemblies in axial position to prevent one set from contacting the other.

An end cap 40 is attached to each end of the housing 12 so as to rotate with the housing 12. To assist in indexing the roll cage assemblies 30 to their corresponding hubs 20, each end cap 40 is associated with a friction disk mechanism 50, shown in detail in Figs. 2, 3, 5, and 5A. Each friction disk mechanism 50 creates a frictional engagement between its associated roll cage assembly 30 and hub 20 so that roll cages 32 rotate with the hubs 20 when both hubs 20 are rotating. In combination, the friction disk mechanisms 50 and the roll cage coupler 60 make up an indexing assembly.

In particular, when a wheeled vehicle is stationary such that the hubs 20 are stationary, and rotational movement is applied to the housing 12 via an external drive mechanism, the housing 12 begins to rotate with respect to the hubs 20. The friction disk mechanisms 50 prevent the roll cage assemblies 30 from rotating with respect to the hubs 20 (thus indexing the roll cage assemblies 30 relative to the housing 12). Indexing places the rollers 36 in position so that they can wedgingly engage between the forward cam surfaces 82a and the hub 20. Once the rollers 36 are wedgingly engaged, the housing 12, the roll cages 32, and the hubs 20 all rotate together, and the rollers 36 remain non-rotating about their own axes.

During overrunning of one hub 20, for example, hub 20a, the friction of each friction disk mechanism 50 continues to hold its associated roll cage assembly 30 in position relative to the housing 12. The speed of the overrunning hub 20a, however, is faster than the speed of the roll cage 32, thus causing the hub 20a to drive the rollers 36 in the roll cage assembly 30 associated with the hub 20a out of their wedging engagement so that the hub 20a can rotate faster than the housing 12. At this point the rollers 36 in the roll cage assembly 30 associated with hub 20a are free to rotate about their own axes. The other hub 20, hub 20b, continues to be driven at the same rotational speed as the housing 12, with its corresponding rollers 36 wedged into engagement. The roll cage coupler 60 couples the two roller assemblies 30 so that both remain engaged to the driven (non-overrunning) hub 20b, thereby preventing either or both of the roller assemblies 30 from indexing from forward engagement of the rollers 36 into reverse engagement. The gap between the intermittent coupler and roll cages (difference between W2 and W1) is designed to allow limited movement for proper function within the assembly system.

Each friction disk mechanism 50 may include a friction plate or disk 52 that is attached to, formed on, or engaged with the roll cage 32 so as to rotate in combination with the roll cage 32. The friction plate 52 can be permanently or removably attached to the roll cage 32, or may simply be a surface on the roll cage 32. In one arrangement, the friction plate 52 is a substantially planar annular ring with radially extending tabs or teeth that are sized to extend into the slots 34 on the roll cage 32 when the friction plate 52 is placed within the roll cage 32 and adjacent to an inside end surface 51 of the roll cage 32. The friction plate 52 is configured to engage with a portion of the hub 20. More specifically, in one arrangement, the hub 20 includes a contact surface 54, which may be integral with, formed on, or attached to the hub, preferably on an axial end surface of the hub so as to be adjacent to a portion of the friction plate 52. The portions of the friction plate 52 and contact surface 54 that contact one another preferably have a sufficient coefficient of friction to create frictional contact for transferring torque between the two as contemplated by the present invention.

A spring 58 is compressed between a bearing 56 and an outer surface 55 on the roll cage 32. In the depicted arrangement, the spring 58 is a wave spring. The spring 58 biases the roll cage 32, and thus the friction plate 52, into the contact surface 54 of the hub 20. As such, the spring 58 causes the roll cage 32 to move axially with respect to the hub 20, thereby urging the friction plate 52 into frictional engagement with the hub 20. To inhibit or prevent torsional forces from being imposed on the spring 58 by the end cap 40, the bearing 56 may include at least one low friction coefficient surface 59. In one arrangement, the low friction coefficient surface 59 is on a side of the contact surface that engages with the spring 58, such that if the bearing 56 were to rotate along with the end cap 40, the bearing 56 would impose only minimal torsional loading on the spring 58. In another embodime arrangement nt, the low friction coefficient surface 59 is on a side of the contact surface that engages with the end cap 40. As such, the low friction coefficient surface 59 substantially prevents the bearing 56 from rotating with the end cap 40. In another arrangement, the low friction coefficient surface 59 may be on both sides of the bearing 56 and is in contact with both the spring 58 and a portion of the end cap 40. In one arrangement, the bearing 56 is a thrust washer or thrust bearing that permits rotational motion between the spring 58 and the end cap 40. In another arrangement, the bearing 56 is an annular ring of sufficient strength to provide rigid support for the spring 58.

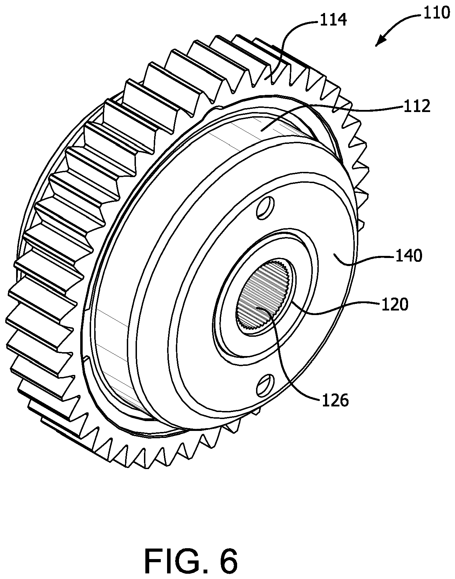

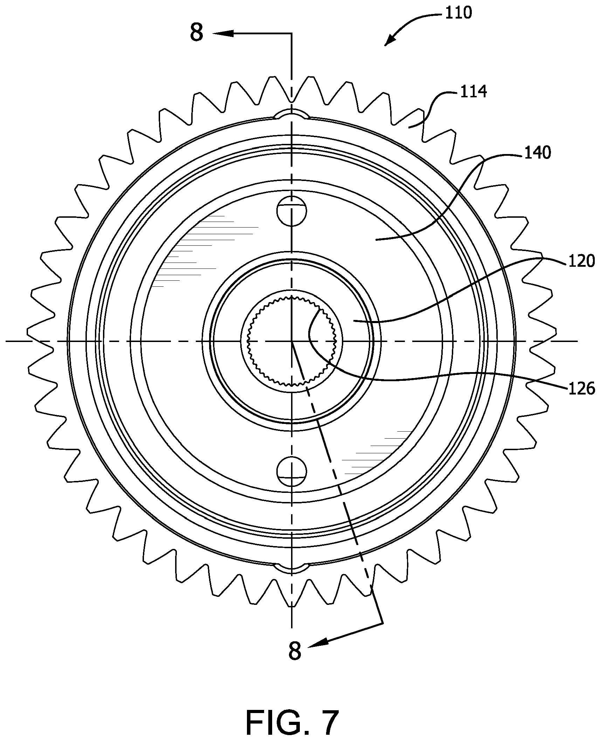

Another arrangement of a bi-directional overrunning clutch 110 is shown in Figs. 6-8. The clutch 110 includes a housing 112 and a gear 114 affixed to the housing 112. The gear 114 is adapted to be engaged with an external drive mechanism that imparts rotational movement to the gear 114 and thus to the housing 112. Although not specifically depicted, the housing 112 includes substantially cylindrical inner surface 180 having a plurality of inner cam surfaces including forward and reverse cam surfaces, as described previously.

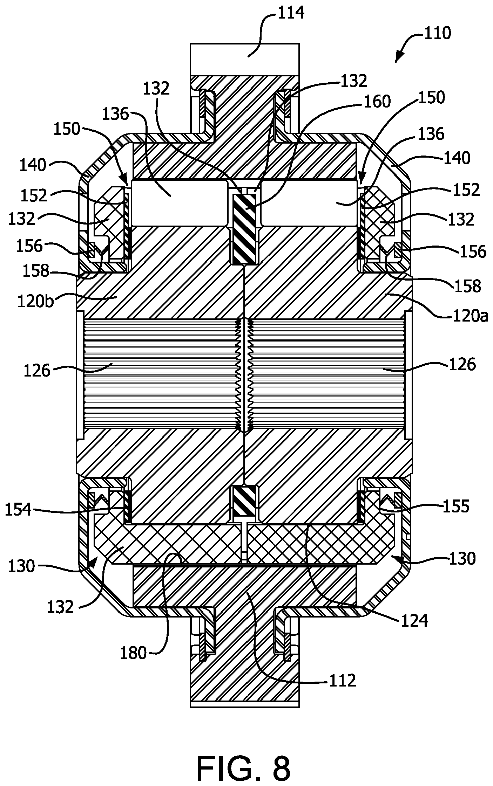

As shown in Fig. 8, a pair of hubs 120 is located within the housing 112. The hubs 120 are substantially coaxially aligned with each other within the housing 112, and are each adapted to rotate about their common axis within the housing 112. Each hub 120 has a substantially cylindrical outer surface 124 having a diameter smaller than the diameter of the inner surface 180 of the housing 112, so that an annular space is formed between the outer surface 124 of the hubs 120 and the inner surface of the housing 112. Each hub 120 has an internal bore 126 into which a portion of a primary drive axle shaft is received. In the depicted arrangement, the internal bores 126 include splines to allow the shafts to move axially inward and outward with respect to the hubs 120 while ensuring that each shaft will rotate along with its respective hub 120. In other arrangement, other mechanical connections between each shaft and its respective hub 120 may be used to ensure rotational coupling.

A pair of roller assemblies 130 is located within the housing 112, with a portion of each roller assembly 130 being situated in the annular space between the outer surface 124 of one of the hubs 120 and the inner surface 180 of the housing 112. Each roller assembly 130 includes a roll cage 132 formed in a substantially cylindrical shape. Each roll cage 132 corresponds to one of the hubs 120 and has a set of slots 134 spaced around the circumference of the roll cage 132. Each slot 134 is adapted to receive a cylindrical roller 136. Collectively, the slots 134 of one roll cage 132 position a plurality of rollers 136 in the annular space between the first hub 120a and the inner cam surface of the housing 112, and the slots 134 of the other roll cage 132 position a plurality of rollers 136 in the annular space between the second hub 120b and the inner cam surface of the housing 112. In one arrangement, each set of rollers 136 has ten rollers, it being understood that any number of rollers greater than or equal to three may be used. As shown, each roller 136 is substantially cylindrical, but rollers of other shapes may be used, including but not limited to substantially spherical rollers.

The rollers 136 surrounding each hub 120 are adapted to be wedgingly engaged between the hub 120 and the inner cam surface of the housing 112 when one of the hubs 120 and the housing 112 is rotated with respect to the other. In particular, when the housing 112 is rotationally driven by an external drive mechanism at a speed faster than the hubs 120 are rotating, the rollers 136 wedgingly engage forward cam surfaces in the housing and the outer surfaces 124 of the hubs 120, causing the hubs 120 to rotate with the housing 112. Similarly, when the drive shafts and hubs 120 are both rotating faster than the housing 112, such as during a descent, the hubs 120 cause the rollers 136 to engage with the reverse cam surfaces, resulting in a back driving or engine brake effect, when available.

To prevent potential reverse engagement of one hub 120 while the other hub 120 is in forward engagement, the clutch 110 includes a roll cage intermittent coupler 160 positioned between the two roll assemblies 130, as shown in Fig. 8. The coupler 160 includes a hub with a plurality of teeth extending radially outward from the hub. The number of teeth preferably matches the number of slots 134 and the number of rollers 136 in each roll cage 132, although there could be less teeth. As discussed above with respect to the prior emb arrangement odiment, the teeth of the coupler 160 have a width that is less than the width of the slots 134 so as to define a gap that permits indexing of one cage relative to the other.

An end cap 140 is attached to or disposed about each end of the housing 112 and may rotate with the housing 112. To assist in indexing the roll cage assemblies 130 to their corresponding hubs 120, a friction disk mechanism 150 is located between each roll cage assembly 130 and its associated hub 120. Each friction disk mechanism 150 urges its corresponding roll cage assembly 130 to frictionally engage with the corresponding hub 120 so that the roll cages 132 rotate with the hubs 120 when both hubs rotate.

Each friction disk mechanism 150 is similar to the friction disk mechanism 50 described above and includes a friction plate 152 that engages with a contact surface 154 on the hub 120. A bearing 156 is disposed between one end of a spring 158 and an inner surface of the end cap 140. The other end of the spring 158 contacts an outer surface 155 on the roll cage 132. As such, the two roll cages 132 are biased toward one another, forcing the friction plates 152 into contact with the contact surfaces 154. The spring 158 is preferably a wave spring, although other springs and or elastomers can be used. The bearing 158 may include one or more low friction surfaces as discussed above.

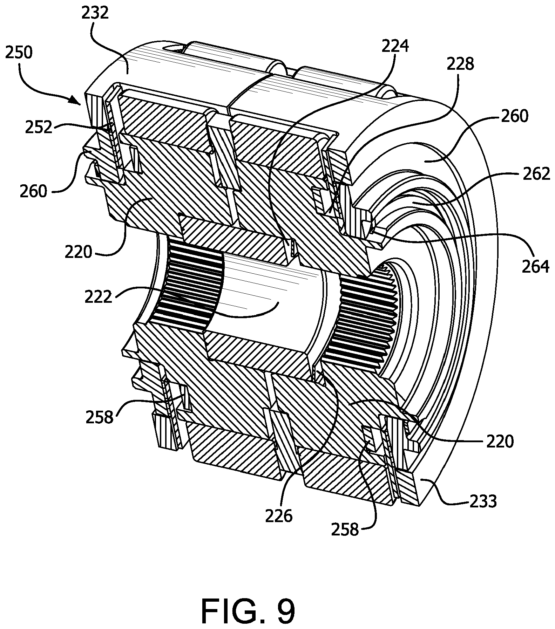

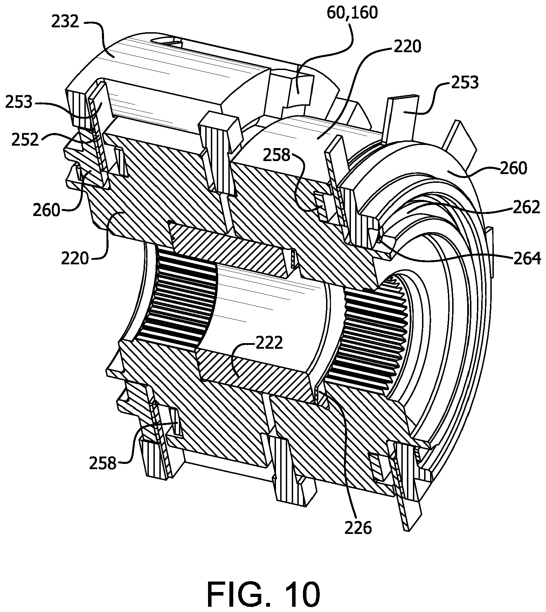

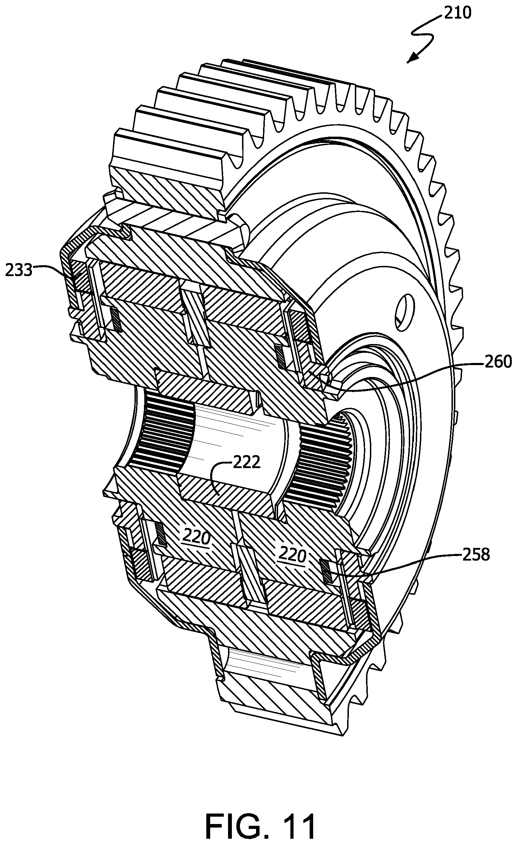

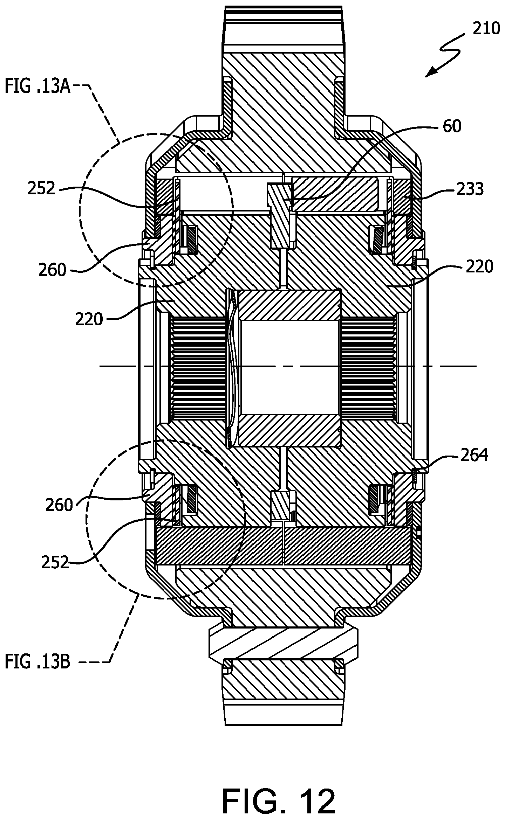

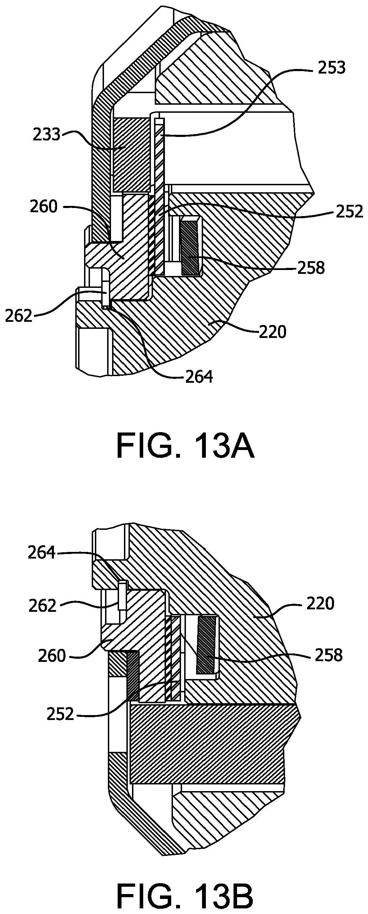

Referring now to Figs. 9-14, an embodiment of the bi-directional clutch 210 is shown. Many features of this clutch are similar to the arrangements disclosed above. As will be discussed below, this embodiment includes a different friction disk mechanism (or drag assembly) 250 which allows for ease of assembly and reduces tolerance buildups. As shown the hubs 220 are similar to the hubs discussed above except that there is a bushing 222 located in recesses 224 formed in the inward ends of each hub 220. The bushing 220 is intended to keep the hubs aligned on the same axis to one another to reduce/minimize hub flex from the axle loading. A spring 226, such as a wave spring, or similar biasing member is located between at least one of the hubs and one side of the bushing 222. The wave spring 226 biases both friction disk drag sub-assemblies to the inside surfaces of covers in Fig 13. Each hub preferably includes an outer recess 228 located on an outward end of the hub 220. The friction disk mechanism 250 includes a spring 258, such as a wave spring, or similar biasing member is located in the recess 228. A friction disk 252, similar to friction disk 52, is located against a face of the hub spacer 260, sandwiching the spring 258 between the friction disk 252 and the hub 220. A hub spacer 260 is located between an end cap or cover 240 and the friction disk 252. As shown, the spacer 260 is preferably T-shaped with its large flat surface oriented so as to contact the friction disk 252. The hub spacer 260 is mechanically connected to the hub 220. The connection can be through any conventional means, but is preferably a spline connection. This connection keeps hub 220 and hub spacer 260 rotatably engaged. The hub spacer 260 extends out of an opening in the cover to help pilot the cover and ring gear. Preferably there is a friction material on the ace of the friction disk. The friction material is similar to the friction material used in conventional clutch packs and, therefore, no further description is necessary.

A retaining ring 262 is located between the hub spacer 260 and the hub 220. Specifically, the retaining ring 262 engages a recess 264 formed in the hub 220 or more particularly in a race portion of the hub 220. The retaining ring 262 engages an outer facing surface of the hub spacer 260. As should be apparent from the drawings, the retaining ring 262 is configured to urge the hub spacer 260 into friction disk 252, which in turn compresses the spring 258 into the hub 220.

Each friction disk 252 has radial extended tabs or teeth 253 that are sized to extend adjacent to an outer ring portion 233 of roll cage 232. The tabs or teeth 253 engage the roll cage 232 so as to rotate in combination with the roll cage 232. This friction disk arrangement is not exclusive and the plate or disk can be attached to, formed on, or engaged with the roll cage 232 by other means to ensure rotation with the roll cage 232. The large inner surface of each hub spacer 260 are in frictional contact with friction disk 252. The spring 258 biases the friction disk 252 outward causing the friction disk 252 to frictionally contact the hub spacer 260. The frictional engagement causes the roll cage 232 to drag or index the rollers into wedging engagement between the hub 220 and inner cam surfaces of the clutch housing.

Although the spring is shown in a recess in the hub, those skilled in the art would appreciate that the system will also work with the spring pushing off the hub spacer and the friction disk mated with the hub. Also the spring could be mounted so as to bias the friction disk to the hub. Also, the roll cage could be formed so as to form an interface between the hub spacer and the hub, and the friction material can be bonded to the outside or insider of the area of the roll cage that would be facing the friction disk.

While the invention has been disclosed with reference to certain preferred embodiments, numerous modifications, alterations, and changes to the described embodiments are possible without departing from the sphere and scope of the invention, as defined in the appended claims. Accordingly, it is intended that the invention not be limited to the described embodiments, but that it have the full scope defined by the language of the following claims.

## Claims

1. A bi-directional overrunning clutch (210) comprising:
a housing (12, 212) adapted to be engaged with and rotated by a drive mechanism, the housing including an inner cam surface (82);
a pair of hubs (220) substantially coaxially aligned with each other within the housing and adapted to engage first and second shafts of a primary drive axle;
a roller assembly (30, 130) associated with each hub, each roller assembly including a roll cage (232) having a set of slots (34, 134) positioning a plurality of rollers (36, 136) in an annular space between the hub and the inner cam surface of the housing, the rollers being spaced about an associated hub and adapted to wedgingly engage between the hub and the inner cam surface when one of the hubs and the housing is rotated with respect to the other of the hubs and the housing;
an end cap (240) associated with each hub and attached at each end of the housing;
**characterised in that** the clutch further comprises:
a friction disk mechanism (50, 150) associated with each hub and roller assembly for indexing the roller assembly relative to the hub, each friction disk mechanism including a friction plate (252) engaged with the roll cage so as to rotate in combination with the roll cage and positioned to contact a contact surface (54, 154) on the hub during operation, and a spring (258) compressed for biasing the friction plate into frictional contact with the contact surface of the hub; and
a roll cage intermittent coupler (60) located between each roll cage, the coupler configured to engage the roll cages so as to permit indexing of one roll cage relative to the other;
wherein the inner cam surface has a forward cam surface (82a) and a reverse cam surface (82b), such that when the housing is being driven with respect to at least one of the hubs, the rollers wedgingly engage between the forward cam surface and the at least one hub; and
wherein when one of the hubs (220) is overrunning by rotating faster than the housing (212)and the other of the hubs, the roll cage coupler (60) is configured to prevent the one set of rollers (36, 136) engaging the forward cam surface and the other set of rollers engaging the reverse cam surface, thereby limiting the ability of the rollers to engage between the reverse cam surface of the housing and the one hub; and
wherein the contact surface is on a hub spacer (260) connected to the hub (220) so as to rotate in combination therewith, and the spring (258) is mounted on the opposite side of the friction plate (252) from the contact surface and compressed between the hub (220) and the friction plate,
and wherein the engagement of the friction plate and the roll cage (232) is provided by the spring biasing the friction plate into frictional engagement with a portion of the roll cage.

2. The overrunning clutch (210) of claim 1, wherein the spring (258) is a wave spring.

3. The overrunning clutch (210) of claims 1 or 2, wherein the friction plate (252) includes one or more radially extending teeth engaged with the roll cage (232).

4. The overrunning clutch (210) of any of claims 1-3, further comprising a bearing surface (156) on the end cap (240), the spring (258) having an end that bears against the bearing surface.

5. The overrunning clutch (210) of claim 4, wherein the bearing surface includes a low friction surface (259) in contact with the end of the spring (258).

6. The overrunning clutch (210) of any of claims 1-5, wherein the roll cage coupler (60) includes one or more radially extending teeth (64) that each engage with one of the slots (34, 134) in each of the roll cages (232).

7. The overrunning clutch (210) of any of claims 1-5, wherein the coupler (60) includes a coupler hub (62) with radially extending coupler teeth (64), each coupler tooth having a length and width (W1) designed to position the coupler tooth in a corresponding slot (34, 134) in both cages (232), the width of the coupler tooth being less than the width (W2) of the associated slots so as to define a gap that permits one roll cage to index with respect to the other roll cage and the coupler tooth.

8. The overrunning clutch (210) of claim 7, wherein the gap is sized so that one roll cage (232) can index so as to position its rollers (36, 136) to engage with one of either the forward and rear cam surfaces (82a, 82b), while the coupler teeth (64) prevent the other roll cage from indexing in the other direction thereby preventing its rollers from engaging with the other of either the forward and rear cam surfaces.

9. The overrunning clutch (210) of claim 1, wherein the contact surface (54, 154) is on the hub spacer (260), and wherein the spring (258) is mounted in a recess (228) in the hub on the opposite side of the friction plate (252).

10. The overrunning clutch (210) of any of the preceding claims for use on a primary drive axle.

11. A system to control torque transmission on a drive shaft of a wheeled machine including an overrunning clutch (210) according to any of claims 1-9.

## Patentansprüche

1. Eine bidirektionale Freilaufkupplung (210), die Folgendes beinhaltet:
ein Gehäuse (12, 212), das angepasst ist, um mit einem Antriebsmechanismus in Eingriff zu stehen und davon gedreht zu werden, wobei das Gehäuse eine innere Nockenfläche (82) umfasst;
ein Paar Naben (220), die innerhalb des Gehäuses im Wesentlichen koaxial aufeinander ausgerichtet sind und angepasst sind, um in eine erste und zweite Welle einer primären Antriebsachse einzugreifen;
eine mit jeder Nabe assoziierte Rollkörperanordnung (30, 130), wobei jede Rollkörperanordnung einen Rollkäfig (232) umfasst, der einen Satz Schlitze (34, 134), die eine Vielzahl von Rollkörpern (36, 136) in einem ringförmigen Raum zwischen der Nabe und der inneren Nockenfläche des Gehäuses positionieren, aufweist, wobei die Rollkörper um eine assoziierte Nabe herum mit Abstand angeordnet sind und
angepasst sind, um zwischen der Nabe und der inneren Nockenfläche keilend in Eingriff zu kommen, wenn eines von den Naben und dem Gehäuse in Bezug auf das andere von den Naben und dem Gehäuse gedreht wird;
eine mit jeder Nabe assoziierte und an jedem Ende des Gehäuses angeordnete Endkappe (240);
**dadurch gekennzeichnet, dass** die Kupplung ferner Folgendes beinhaltet:
einen mit jeder Nabe und Rollkörperanordnung assoziierten Reibscheibenmechanismus (50, 150) zum kontrollierten Bewegen der Rollkörperanordnung relativ zu der Nabe, wobei jeder Reibscheibenmechanismus Folgendes umfasst: eine Reibungsplatte (252), die mit dem Rollkäfig in Eingriff steht, um sich in Kombination mit dem Rollkäfig zu drehen, und positioniert ist, um während des Betriebs eine Kontaktfläche (54, 154) auf der Nabe zu berühren, und eine Feder (258), die zum Vorspannen der Reibungsplatte in den reibschlüssigen Kontakt mit der Kontaktfläche der Nabe komprimiert ist; und
einen Rollkäfigzwischenkoppler (60), der sich zwischen jedem Rollkäfig befindet, wobei der Koppler zum Eingriff in die Rollkäfige konfiguriert ist, um ein kontrolliertes Bewegen eines Rollkäfigs relativ zu dem anderen zu gestatten;
wobei die innere Nockenfläche eine vordere Nockenfläche (82a) und eine rückwärtige Nockenfläche (82b) aufweist, so dass, wenn das Gehäuse in Bezug auf mindestens eine der Naben angetrieben wird, die Rollkörper keilend zwischen der vorderen Nockenfläche und der mindestens einen Nabe in Eingriff kommen; und
wobei, wenn eine der Naben (220) freiläuft, indem sie sich schneller dreht als das Gehäuse (212) und die andere der Naben, der Rollkäfigkoppler (60) konfiguriert ist, zu verhindern, dass der eine Satz Rollkörper (36, 136) in die vordere Nockenfläche eingreift und der andere Satz Rollkörper in die rückwärtige Nockenfläche eingreift, wodurch die Fähigkeit der Rollkörper, zwischen der rückwärtigen Nockenfläche des Gehäuses und der einen Nabe in Eingriff zu kommen, begrenzt wird; und
wobei sich die Kontaktfläche auf einem Nabenabstandshalter (260) befindet, der mit der Nabe (220) verbunden ist, um sich in Kombination damit zu drehen, und die Feder (258) auf der der Kontaktfläche entgegengesetzten Seite der Reibungsplatte (252) montiert und zwischen der Nabe (220) und der Reibungsplatte komprimiert ist,
und wobei der Eingriff der Reibungsplatte und des Rollkäfigs (232) dadurch bereitgestellt wird, dass die Feder die Reibungsplatte in den reibschlüssigen Eingriff mit einem Teil des Rollkäfigs vorspannt.

2. Freilaufkupplung (210) gemäß Anspruch 1, wobei die Feder (258) eine Wellfeder ist.

3. Freilaufkupplung (210) gemäß Anspruch 1 oder 2, wobei die Reibungsplatte (252) einen oder mehrere sich radial erstreckende Zähne umfasst, die mit dem Rollkäfig (232) in Eingriff stehen.

4. Freilaufkupplung (210) gemäß einem der Ansprüche 1-3, die ferner eine Auflagefläche (156) auf der Endkappe (240) beinhaltet, wobei die Feder (258) ein Ende aufweist, das gegen die Auflagefläche drückt.

5. Freilaufkupplung (210) gemäß Anspruch 4, wobei die Auflagefläche eine reibungsarme Fläche (259) in Kontakt mit dem Ende der Feder (258) umfasst.

6. Freilaufkupplung (210) gemäß einem der Ansprüche 1-5, wobei der Rollkäfigkoppler (60) einen oder mehrere sich radial erstreckende Zähne (64) umfasst, die jeweils mit einem der Schlitze (34, 134) in jedem der Rollkäfige (232) in Eingriff stehen.

7. Freilaufkupplung (210) gemäß einem der Ansprüche 1-5, wobei der Koppler (60) eine Kopplernabe (62) mit sich radial erstreckenden Kopplerzähnen (64) umfasst, wobei jeder Kopplerzahn eine Länge und Breite (W1) aufweist, die dazu entworfen sind, den Kopplerzahn in einen entsprechenden Schlitz (34, 134) in beiden Käfigen (232) zu positionieren, wobei die Breite des Kopplerzahns geringer als die Breite (W2) des assoziierten Schlitzes ist, um eine Lücke zu definieren, die das kontrollierte Bewegen eines Rollkäfigs in Bezug auf den anderen Rollkäfig und den Kopplerzahn gestattet.

8. Freilaufkupplung (210) gemäß Anspruch 7, wobei die Lücke so bemessen ist, dass sich ein Rollkäfig (232) kontrolliert so bewegen kann, dass er seine Rollkörper (36, 136) zum Eingriff mit einer von entweder der vorderen oder der hinteren Nockenfläche (82a, 82b) positioniert, während die Kopplerzähne (64) verhindern, dass sich der andere Rollkäfig kontrolliert in die andere Richtung bewegt, wodurch verhindert wird, dass seine Rollkörper mit der anderen von entweder der vorderen oder der hinteren Nockenfläche in Eingriff kommen.

9. Freilaufkupplung (210) gemäß Anspruch 1, wobei die Kontaktfläche (54, 154) auf dem Nabenabstandshalter (260) liegt und wobei die Feder (258) in einer Aussparung (228) in der Nabe auf der entgegengesetzten Seite der Reibungsplatte (252) montiert ist.

10. Freilaufkupplung (210) gemäß einem der vorhergehenden Ansprüche zur Verwendung auf einer primären Antriebsachse.

11. Ein System zum Steuern der Drehmomentübertragung auf einer Antriebswelle einer Maschine mit Rädern, das eine Freilaufkupplung (210) gemäß einem der Ansprüche 1-9 umfasst.

## Revendications

1. Un embrayage à roue libre bidirectionnel (210) comprenant :
un boîtier (12, 212) conçu pour être mis en prise avec et tourné par un mécanisme d'entraînement, le boîtier incluant une surface de came intérieure (82) ;
une paire de moyeux (220) alignés de façon substantiellement coaxiale l'un avec l'autre à l'intérieur du boîtier et conçus pour se mettre en prise avec des premier et deuxième arbres d'un essieu moteur primaire ;
un ensemble de rouleaux (30, 130) associé à chaque moyeu, chaque ensemble de rouleaux incluant une cage de cylindres (232) ayant un jeu d'encoches (34, 134) positionnant une pluralité de rouleaux (36, 136) dans un espace annulaire entre le moyeu et la surface de came intérieure du boîtier, les rouleaux étant espacés autour d'un moyeu associé et conçus pour se mettre en prise en se calant entre le moyeu et la surface de came intérieure quand un élément parmi les moyeux et le boîtier est tourné par rapport à l'autre élément parmi les moyeux et le boîtier ;
un chapeau d'extrémité (240) associé à chaque moyeu et attaché à chaque extrémité du boîtier ;
**caractérisé en ce que** l'embrayage comprend en sus :
un mécanisme à disque de friction (50, 150) associé à chaque moyeu et ensemble de rouleaux pour l'indexage de l'ensemble de rouleaux relativement au moyeu, chaque mécanisme à disque de friction incluant une plaque de friction (252) mise en prise avec la cage de cylindres de façon à tourner en combinaison avec la cage de cylindres et
positionnée afin d'entrer au contact d'une surface de contact (54, 154) sur le moyeu pendant le fonctionnement, et un ressort (258) comprimé pour solliciter la plaque de friction afin qu'elle entre en contact frictionnel avec la surface de contact du moyeu ; et
un coupleur intermittent (60) de cages de cylindres situé entre chaque cage de cylindres, le coupleur étant configuré afin de se mettre en prise avec les cages de cylindres de façon à permettre l'indexage d'une cage de cylindres relativement à l'autre ; dans lequel la surface de came intérieure a une surface de came avant (82a) et une surface de came envers (82b), de telle sorte que quand le boîtier est entraîné par rapport à au moins un des moyeux, les rouleaux se mettent en prise en se calant entre la surface de came avant et l'au moins un moyeu ; et
dans lequel quand un des moyeux (220) est en roue libre en tournant plus vite que le boîtier (212) et l'autre des moyeux, le coupleur (60) de cages de cylindres est configuré afin d'empêcher un jeu de rouleaux (36, 136) de se mettre en prise avec la surface de came avant et l'autre jeu de rouleaux de se mettre en prise avec la surface de came envers, limitant ainsi la capacité des rouleaux à se mettre en prise entre la surface de came envers du boîtier et cet un moyeu ; et
dans lequel la surface de contact est sur une butée de moyeu (260) raccordée au moyeu (220) de façon à tourner en combinaison avec celui-ci, et le ressort (258) est monté sur le côté opposé de la plaque de friction (252) par rapport à la surface de contact et comprimé entre le moyeu (220) et la plaque de friction,
et dans lequel la mise en prise de la plaque de friction et de la cage de cylindres (232) est fournie par le fait que le ressort sollicite la plaque de friction afin qu'elle se mette en en prise frictionnelle avec une portion de la cage de cylindres.

2. L'embrayage à roue libre (210) de la revendication 1, dans lequel le ressort (258) est un ressort ondulé.

3. L'embrayage à roue libre (210) des revendications 1 ou 2, dans lequel la plaque de friction (252) inclut une ou plusieurs dents s'étendant radialement mises en prise avec la cage de cylindres (232).

4. L'embrayage à roue libre (210) de n'importe lesquelles des revendications 1 à 3, comprenant en sus une surface d'appui (156) sur le chapeau d'extrémité (240), le ressort (258) ayant une extrémité qui appuie contre la surface d'appui.

5. L'embrayage à roue libre (210) de la revendication 4, dans lequel la surface d'appui inclut une surface à faible friction (259) en contact avec l'extrémité du ressort (258).

6. L'embrayage à roue libre (210) de n'importe lesquelles des revendications 1 à 5, dans lequel le coupleur (60) de cages de cylindres inclut une ou plusieurs dents (64) s'étendant radialement, qui se mettent chacune en prise avec une des encoches (34, 134) dans chacune des cages de cylindres (232).

7. L'embrayage à roue libre (210) de n'importe lesquelles des revendications 1 à 5, dans lequel le coupleur (60) inclut un moyeu de coupleur (62) avec des dents (64) de coupleur s'étendant radialement, chaque dent de coupleur ayant une longueur et une largeur (W1) pensées afin de positionner la dent de coupleur dans une encoche (34, 134) correspondante dans les deux cages (232), la largeur de la dent de coupleur étant inférieure à la largeur (W2) des encoches associées de façon à définir un écartement qui permet à une cage de cylindres de s'indexer par rapport à l'autre cage de cylindres et à la dent de coupleur.

8. L'embrayage à roue libre (210) de la revendication 7, dans lequel l'écartement est dimensionné de façon qu'une cage de cylindres (232) puisse s'indexer de façon à positionner ses rouleaux (36, 136) afin qu'ils se mettent en prise avec une surface parmi les surfaces de came soit avant, soit arrière (82a, 82b), pendant que les dents (64) de coupleur empêchent l'autre cage de cylindres de s'indexer dans l'autre direction, empêchant ainsi ses rouleaux de se mettre en prise avec l'autre surface parmi les surfaces de came soit avant, soit arrière.

9. L'embrayage à roue libre (210) de la revendication 1, dans lequel la surface de contact (54, 154) est sur la butée de moyeu (260), et dans lequel le ressort (258) est monté dans un renfoncement (228) dans le moyeu sur le côté opposé de la plaque de friction (252).

10. L'embrayage à roue libre (210) de n'importe lesquelles des revendications précédentes pour son utilisation sur un essieu moteur primaire.

11. Un système afin de contrôler une transmission de couple sur un arbre d'entraînement d'une machine à roues incluant un embrayage à roue libre (210) selon n'importe lesquelles des revendications 1 à 9.
